(19) Europäisches Patentamt / European Patent Office / Office européen des brevets

(11) **EP 2 647 990 B1**

(12) **FASCICULE DE BREVET EUROPEEN**

(45) Date de publication et mention de la délivrance du brevet:
**24.05.2023 Bulletin 2023/21**

(21) Numéro de dépôt: **13162366.2**

(22) Date de dépôt: **04.04.2013**

(51) Classification Internationale des Brevets (IPC):
**G01N 30/86** (2006.01)   **G01N 30/72** (2006.01)
**G01N 33/68** (2006.01)   **G06F 17/17** (2006.01)
**G01N 30/88** (2006.01)   **G01N 27/623** (2021.01)

(52) Classification Coopérative des Brevets (CPC):
**G01N 30/72; G01N 27/623; G01N 30/86; G01N 30/88;** G01N 2030/8813

(54) **PROCÉDÉ ET DISPOSITIF D'ESTIMATION DE PARAMÈTRES MOLÉCULAIRES DANS UN ÉCHANTILLON TRAITÉ PAR CHROMATOGRAPHIE**

VERFAHREN UND VORRICHTUNG ZUM ABSCHÄTZEN DER MOLEKÜLPARAMETER IN EINER CHROMATOGRAFISCH BEHANDELTEN PROBE

METHOD AND DEVICE FOR ESTIMATING MOLECULAR PARAMETERS IN A SAMPLE PROCESSED BY MEANS OF CHROMATOGRAPHY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2012 FR 1253181**

(43) Date de publication de la demande:
**09.10.2013 Bulletin 2013/41**

(73) Titulaire: **Commissariat à l'Énergie Atomique et aux Énergies Alternatives 75015 Paris (FR)**

(72) Inventeurs:
• **Gerfault, Laurent**
  **38210 Tullins (FR)**
• **Grangeat, Pierre**
  **38330 Saint Ismier (FR)**

(74) Mandataire: **Bonnet, Michel**
  **Cabinet Bonnet**
  **93, rue Réaumur - Boîte 10**
  **75002 Paris (FR)**

(56) Documents cités:
  **EP-A1- 2 028 486     WO-A1-2010/026228**

• **STRUBEL G ET AL: "Bayesian estimation for molecular profile reconstruction in proteomics based on liquid chromatography and mass spectrometry", 2007 ANNUAL INTERNATIONAL CONFERENCE OF THE IEEE ENGINEERING IN MEDICINE AND BIOLOGY SOCIETY : [EMBC '07] ; LYON, FRANCE, 22 - 26 AUGUST 2007 ; [IN CONJUNCTION WITH THE BIENNIAL CONFERENCE OF THE SOCIÉTÉ FRANÇAISE DE GÉNIE BIOLOGIQUE ET MÉDICAL (SFGB, 22 August 2007 (2007-08-22), pages 5979-5982, XP031337589, ISBN: 978-1-4244-0787-3**

**Description**

La présente invention concerne un procédé d'estimation de paramètres moléculaires dans un échantillon. Elle concerne également un dispositif disposant de moyens pour la mise en oeuvre de ce procédé.

Une application particulièrement prometteuse d'un tel procédé est par exemple l'analyse d'échantillons biologiques tels que des prélèvements sanguins ou de plasma pour en extraire des paramètres biologiques tels qu'une estimation de concentrations moléculaires en protéines. La connaissance de ces concentrations permet de détecter des anomalies ou maladies. Notamment, il est connu que certaines maladies telles que des cancers, même à un stade peu avancé, peuvent avoir un impact éventuellement décelable sur les concentrations moléculaires de certaines protéines. Plus généralement, l'analyse d'échantillons pour l'extraction de paramètres pertinents permettant une aide au diagnostic d'un état (santé, pollution, ...) pouvant être associé à ces échantillons est un domaine d'application prometteur d'un procédé selon l'invention.

Parmi les applications concrètes envisageables, on peut noter les suivantes : l'analyse biologique d'échantillons par détection de protéines ; la caractérisation de bactéries par spectrométrie de masse ; la caractérisation de l'état de pollution d'un échantillon chimique (par exemple, le dosage d'un gaz dans un environnement ou le dosage d'un métal lourd dans un échantillon liquide). Les paramètres moléculaires pertinents extraits peuvent comporter des concentrations de composants tels que des molécules (peptides, protéines, enzymes, anticorps, ...) ou des assemblages moléculaires. Par assemblage moléculaire on entend par exemple une nanoparticule ou une espèce biologique (bactérie, microorganisme, cellule, ...).

Dans le cas d'une analyse biologique par détection de protéines, toute la difficulté est de parvenir à une estimation la plus précise possible dans un environnement bruité où les protéines d'intérêt sont parfois présentes dans l'échantillon en très petite quantité.

En général, l'échantillon passe par une chaîne de traitement comportant une colonne de chromatographie et un spectromètre de masse. Cette chaîne de traitement est conçue pour la fourniture d'un signal représentatif de concentrations moléculaires des composants dans l'échantillon en fonction d'un temps de rétention dans la colonne de chromatographie et d'au moins un rapport masse/charge dans le spectromètre de masse.

Eventuellement, la chaîne de traitement peut comporter, en amont de la colonne de chromatographie, une centrifugeuse et/ou une colonne de capture par affinité, de manière à purifier l'échantillon. Elle peut en outre comporter, également en amont de la colonne de chromatographie et lorsque les composants à étudier sont des protéines, une colonne de digestion sectionnant les protéines en peptides plus petits, donc mieux adaptés à la gamme de mesure du spectromètre de masse. Enfin, lorsque la chaîne de traitement comporte à la fois une colonne de chromatographie devant être traversée par un échantillon en phase liquide, et un spectromètre de masse, imposant que l'échantillon soit en phase gazeuse, elle doit en outre comporter un électronébulisateur (ou équivalent) apte à procéder au changement de phase nécessaire, en l'occurrence par nébulisation du mélange fourni en sortie de la colonne de chromatographie.

Ainsi, lorsque la chaîne de traitement comporte la colonne de chromatographie et le spectromètre de masse, il est possible de fournir un signal bidimensionnel dont l'amplitude positive varie en fonction du temps de rétention dans la colonne de chromatographie dans une dimension et d'au moins un rapport masse/charge identifié par le spectromètre de masse dans l'autre dimension. Ce signal bidimensionnel présente une multitude de pics révélateurs de concentrations de composants plus ou moins noyés dans du bruit et plus ou moins superposés les uns aux autres.

Un procédé connu d'estimation des concentrations des composants consiste à mesurer la hauteur des pics ou leur intégrale (surface, volume) au delà d'un certain niveau et d'en déduire la concentration d'un composant correspondant. Un autre procédé dit « d'analyse spectrale » consiste à comparer le signal bidimensionnel dans son ensemble à une bibliothèque de modèles répertoriés. Mais ces procédés souffrent généralement d'un manque de précision ou de fiabilité, notamment lorsque les pics sont peu marqués ou rendus moins visibles à cause de bruit ou de pics très voisins qui se superposent.

Un autre procédé connu consiste à exprimer analytiquement la chaîne de traitement et obtenir ainsi un modèle direct du signal fourni en sortie, pour ensuite effectuer une estimation des paramètres moléculaires par inversion de ce modèle à l'aide des valeurs effectivement observées du signal. Un tel procédé est notamment décrit dans la demande de brevet européen publiée sous le numéro EP 2 028 486. Il comporte les étapes suivantes :

- faire passer l'échantillon par une chaîne de traitement incluant une étape de chromatographie et une étape de spectrométrie de masse,
- obtenir ainsi un signal représentatif de concentrations de composants de l'échantillon en fonction d'au moins une variable de la chaîne de traitement, et
- estimer les concentrations à l'aide d'un dispositif de traitement de signal par inversion d'un modèle analytique direct dudit signal défini en fonction de paramètres moléculaires de l'échantillon, parmi lesquels se trouve un vecteur représentatif des concentrations desdits composants, et de paramètres techniques de la chaîne de traitement.

La modélisation analytique proposée dans le document EP 2 028 486 rend le signal de chromato-spectrométrie observé dépendant de paramètres moléculaires de l'échantillon et de paramètres techniques de la chaîne de traitement. Les valeurs de certains de ces paramètres sont variables ou inconnues d'une chromato-spectrométrie à l'autre. Ces paramètres sont alors modélisés par des lois de probabilités indépendantes les unes des autres et l'inversion du modèle est réalisée par inférence bayésienne.

Le modèle proposé dans le document EP 2 028 486 est suffisamment général pour couvrir une grande diversité de chaînes de traitement. Mais cela a un impact sur la précision et la fiabilité de l'estimation finale.

En particulier, lorsque la chaîne de traitement inclut une phase de spectrométrie de masse en tandem, par exemple à l'aide d'un spectromètre SRM (de l'anglais « Selected Reaction Monitoring »), certaines spécificités du traitement ne sont pas prises en compte. Notamment, le modèle n'est pas précisément adapté au fait que deux spectrométries successives soient réalisées, l'une sur un premier type d'ions, dits ions parents, issus de produits de la chromatographie, l'autre sur un deuxième type d'ions, dits ions enfants, issus de fragmentations des ions parents. D'une façon plus générale, lorsque l'étape de chromatographie est suivie d'une étape de fragmentation des produits issus de la chromatographie et de mesures multiples des fragments issus de cette fragmentation, cette spécificité du traitement n'est pas prise en compte, alors que ces mesures multiples, par spectrométrie SRM ou autre, doivent normalement permettre une meilleure caractérisation des paramètres moléculaires de l'échantillon analysé. Cette fragmentation permet d'avoir une meilleure spécificité dans la caractérisation des molécules que l'on souhaite mesurer, ce qui présente un intérêt dans l'analyse de mélanges complexes.

Par mesures multiples, on entend qu'au moins deux fragments découlant d'un même produit sont mesurés. Plus généralement, l'expression "mesures multiples" désigne le fait que deux mesures différentes sont réalisées à partir d'un même produit, ce produit étant issu d'une colonne de chromatographie. De telles mesures permettent de distinguer différents éléments constituant ce produit, ces éléments n'ayant pas été distingués par l'étape de chromatographie. Par exemple, ces différents éléments sont des ions obtenus par la fragmentation du produit dans un spectromètre de masse, en particulier un spectromètre de masse de type SRM.

Ces mesures multiples peuvent également être obtenues par différents capteurs, par exemple des capteurs NEMS, disposés en aval de la colonne, ces capteurs étant agencés pour discriminer la contribution de différents éléments constituant un même produit.

Un procédé d'estimation des concentrations des composants d'un échantillon est connu du document "Bayesian estimation for molecular profile reconstruction in proteomics based on liquid chromatography and mass spectrometry" (STRUBEL G ET AL,2007 ANNUAL INTERNATIONAL CONFERENCE OF THE IEEE ENGINEERING IN MEDICINE AND BIOLOGY SOCIETY, FRANCE, 22 août 2007, ISBN: 978-1-4244-0787-3).

Il peut ainsi être souhaité de prévoir un procédé d'estimation de paramètres moléculaires qui permette de s'affranchir d'au moins une partie des problèmes et contraintes précités et d'améliorer les procédés existants.

Il est donc proposé un procédé d'estimation de paramètres moléculaires dans un échantillon, comme décrit dans la revendication 1.

Ainsi, en intégrant dans la chaîne de traitement une étape de mesures multiples portant sur des produits issus de la chromatographie, par exemple une étape de spectrométrie SRM, la modélisation associée peut être affinée, et donc s'approcher de la réalité, en intégrant également dans le modèle des contraintes de caractéristique(s) commune(s) des signaux obtenus de ces mesures multiples. Il en résulte finalement une meilleure estimation des paramètres moléculaires concernés.

On notera que l'on entend d'une façon générale par « chromatographie » un processus d'analyse moléculaire permettant de suivre temporellement une quantité de molécule dans l'échantillon.

De façon optionnelle également, l'étape de mesures multiples comporte une spectrométrie de masse en tandem de produits issus de l'étape de chromatographie, par exemple une spectrométrie SRM.

De façon optionnelle également, les paramètres moléculaires sont relatifs à des protéines et l'échantillon comporte l'un des éléments de l'ensemble constitué de sang, plasma et urine ou autre fluide biologique.

De façon optionnelle également, le modèle analytique direct prend la forme suivante :

$$M_{i,j,k,l}(n) = \alpha_{i,j,k,l} \cdot \beta_{i,j,k} \cdot g_l\left(Y_{i,j,k}(t)\right) \cdot C_{i,j} + \varepsilon_{i,j,k,l}(n),$$

et

$$M^*_{i,j,k,l}(n) = \alpha^*_{i,j,k,l} \cdot \beta_{i,j,k} \cdot g_l\left(Y_{i,j,k}(t)\right) \cdot C^*_{i,j} + \varepsilon^*_{i,j,k,l}(n),$$

soit :

$$M_i := \left\{ M_{i,j,k,l}(n); M^*_{i,j,k,l}(n) \mid j = 1..J, k = 1..K, l = 1..L \right\},$$

où :

- n est un indice de temps discret,
- i est un indice d'expérience identifiant un passage d'échantillon par la chaîne de traitement,
- j est un indice identifiant une protéine d'intérêt dans l'échantillon,
- k est un indice identifiant un peptide issu d'une digestion de protéine d'intérêt,
- l est un indice identifiant un fragment de peptide ionisé issu de la spectrométrie de masse en tandem,
- $M_i$ est ledit signal représentatif des paramètres moléculaires,
- $\beta_{i,j,k}$ est un paramètre de rendement,
- $\alpha_{i,j,k,l}$ et $\alpha^*_{i,j,k,l}$ sont des paramètres de rendement de la spectrométrie de masse en tandem à partir de l'étape de fragmentation respectivement pour des protéines non marquées et marquées,
- $\varepsilon_{i,j,k,l}$ et $\varepsilon^*_{i,j,k,l}$ sont des paramètres de bruit de la chaîne de traitement respectivement pour des protéines non marquées et marquées,
- $C_{i,j}$ et $C^*_{i,j}$ sont des concentrations de protéines d'intérêt à estimer par inversion du modèle analytique direct,
- $Y_{i,j,k}(t)$ est le signal du peptide ionisé, et
- $g_l$ est une fonction associée au fragment l liant le signal du fragment au signal de son ion parent $Y_{i,j,k}(t)$.

De façon optionnelle également, l'inversion du modèle analytique direct est réalisée par minimisation d'une erreur quadratique selon le critère des moindres carrés ou par une méthode d'inversion bayésienne.

De façon optionnelle également, l'erreur quadratique à minimiser est une erreur quadratique régularisée prenant la forme suivante à l'échelle des fragments des peptides ionisés :

$$\underset{\beta_{i,j,k}, \alpha_{i,j,k,l}, \alpha^*_{i,j,k,l}, C_{i,j}, \theta_{i,j,k}}{\arg\min} \left( \begin{array}{l} \dfrac{1}{R_{ijkl}} \left\| M_{i,j,k,l}(n) - \alpha_{i,j,k,l} \cdot \beta_{i,j,k} \cdot C_{i,j} \cdot g_l \left( Y_{i,j,k}(t, \theta_{i,j,k}) \right) \right\|^2 \\ + \dfrac{1}{R^*_{ijkl}} \left\| M^*_{i,j,k,l}(n) - \alpha^*_{i,j,k,l} \cdot \beta_{i,j,k} \cdot C^*_{i,j} \cdot g_l \left( Y_{i,j,k}(t, \theta_{i,j,k}) \right) \right\|^2 \\ + \mu \left\| \alpha_{i,j,k,l} - \alpha_{i,j,k,l}^* \right\|^2 \end{array} \right),$$

où :

- $\theta_{i,j,k}$ est un ensemble de paramètres définissant la forme du signal mesurable représentatif du peptide k,
- $R_{i,j,k,l}$ est un paramètre de variance de bruit pour le fragment de peptide de la protéine d'intérêt considérée, et
- $R^*_{i,j,k,l}$ est un paramètre de variance de bruit pour le même fragment marqué, et
- $\mu$ est un paramètre de réglage ou de compromis.

Il est également proposé un dispositif d'estimation de paramètres moléculaires dans un échantillon, comme décrit dans la revendication 8.

De façon optionnelle, la chaîne de traitement comporte une colonne de chromatographie et un spectromètre de masse en tandem et est conçue pour la fourniture d'un signal représentatif des concentrations de composants de l'échantillon en fonction d'un temps de rétention dans la colonne de chromatographie et de plusieurs rapports masse/charge dans le spectromètre de masse en tandem.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif d'estimation de paramètres moléculaires selon un mode de réalisation de l'invention,
- la figure 2 illustre une modélisation analytique d'une chaîne de traitement du dispositif de la figure 1, selon un mode de réalisation de l'invention, et
- la figure 3 illustre les étapes successives d'un procédé d'estimation de paramètres moléculaires selon un mode de réalisation de l'invention.

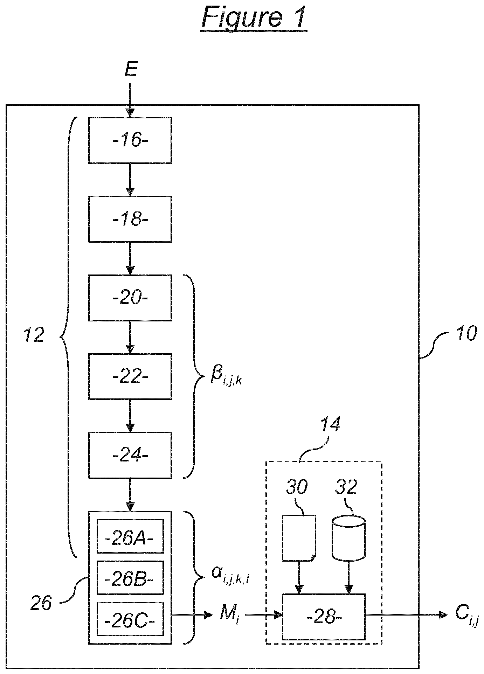

Le dispositif 10 d'estimation de paramètres moléculaires dans un échantillon E, représenté schématiquement sur la figure 1, comporte une chaîne 12 de traitement de l'échantillon E conçue pour la fourniture d'un signal $M_i$ représentatif de ces paramètres moléculaires en fonction d'au moins une variable de la chaîne de traitement 12. Il comporte en outre un dispositif 14 de traitement de signal conçu pour appliquer, en combinaison avec la chaîne de traitement 12, un procédé d'estimation des paramètres moléculaires. L'indice i du signal $M_i$ désigne une expérience, c'est-à-dire un i-ème passage de l'échantillon E dans la chaîne de traitement 12.

Dans l'exemple qui va être détaillé par la suite mais qui ne doit pas être considéré comme limitatif, les paramètres estimés sont des paramètres biologiques, parmi lesquels des concentrations de composants biologiques de l'échantillon E considéré alors comme un échantillon biologique, et la chaîne de traitement 12 est une chaîne de traitement biologique. Plus précisément, les composants sont des protéines d'intérêt, par exemple sélectionnées en fonction de leur pertinence pour caractériser une anomalie, affection ou maladie, et l'échantillon E est un échantillon de sang, de plasma ou d'urine. D'une façon générale, il s'agit d'un liquide biologique, et en particulier d'un liquide corporel. On parlera alors de concentrations moléculaires de protéines pour désigner les concentrations de ces composants particuliers.

Dans la chaîne de traitement biologique 12, l'échantillon E passe tout d'abord par une centrifugeuse 16, puis par une colonne de capture par affinité 18, de manière à être purifié.

Il traverse ensuite une colonne de digestion 20 sectionnant ses protéines en peptides plus petits à l'aide d'une enzyme, par exemple la trypsine.

Puis l'échantillon E passe successivement par une colonne de chromatographie liquide 22, un électronébulisateur 24 et un spectromètre de masse en tandem 26, pour la fourniture du signal $M_i$ qui est alors représentatif des concentrations moléculaires des protéines dans l'échantillon E en fonction d'un temps de rétention dans la colonne de chromatographie 22 et de rapports masse/charge dans le spectromètre de masse 26. Ce signal $M_i$ est l'ensemble des chromatogrammes produits par la chaîne de traitement biologique 12 pour une expérience. Il s'agit d'une fonction temporelle représentant l'amplitude du signal détecté par le spectromètre de masse pour une transition, une transition étant la sélection par le spectromètre de masse d'un ion parent et de l'un de ses ions fils issu de la fragmentation.

Le spectromètre de masse en tandem 26 est plus précisément un spectromètre de masse SRM à triple quadripôle. Le premier quadripôle 26A est un premier analyseur sélectionnant un ion parent (c'est-à-dire finalement un peptide ionisé) par spectrométrie de masse. Le spectromètre de masse peut distinguer, par le rapport masse sur charge, plusieurs ions chargés différemment du peptide k. Typiquement, un seul ion est sélectionné. Ainsi, par la suite, on utilisera le même indice k pour l'ion sélectionné parmi tous les ions produits par l'ionisation du peptide. Le terme peptide ionisé désignera cet ion. Le deuxième quadripôle 26B est une cellule de collision conçue pour fragmenter l'ion parent en une pluralité d'ions fils. Enfin, le troisième quadripôle 26C est un deuxième analyseur sélectionnant un ion fils issu de l'ion parent par fragmentation.

Le passage de l'échantillon E dans la colonne de digestion 20, dans la colonne de chromatographie liquide 22, dans l'électronébulisateur 24 et dans les premiers étages du spectromètre de masse 26 avant la fragmentation se fait selon un rendement noté $\beta_{i,j,k}$, où i désigne l'expérience, j désigne une protéine d'intérêt et k désigne un peptide issu de la colonne de digestion 20. Ce rendement $\beta_{i,j,k}$ caractérise la quantité de peptide k entre son apparition (typiquement après digestion) et sa disparition (typiquement lors de la fragmentation et l'apparition de ses sous-produits). Ce rendement est donc a priori différent d'un peptide à l'autre, d'une protéine d'intérêt à l'autre et d'une expérience à l'autre.

Le passage de l'échantillon E dans le spectromètre de masse SRM, de l'étage de fragmentation jusqu'à la détection des signaux, se fait selon un rendement noté $\alpha_{i,j,k,l}$, où i désigne l'expérience, j désigne une protéine d'intérêt, k désigne un peptide issu de la colonne de digestion 20 et l désigne un fragment de ce peptide. Plus généralement, k désigne un produit issu de la colonne de chromatographie, tandis que l désigne un élément constituant ce produit, cet élément étant détecté par une mesure réalisée en aval de la colonne de chromatographie. Ce rendement est donc a priori différent d'un fragment à l'autre, d'un peptide à l'autre, d'une protéine d'intérêt à l'autre et d'une expérience à l'autre. On notera par ailleurs qu'un couple d'indices (k,l) identifie une transition, définie comme étant la sélection dans le spectromètre de masse SRM 26 d'un ion parent (indice k) issu du peptide k et de l'un de ses ions fils (indice l) après fragmentation.

Le signal $M_i$ est fourni en entrée du dispositif de traitement 14. Plus précisément, le dispositif de traitement 14 comporte un processeur 28 relié à des moyens de stockage comportant notamment au moins une séquence programmée d'instructions 30 et une base de données de modélisation 32.

La base de données 32 comporte les paramètres d'une modélisation directe du signal $M_i$ en fonction :

- de paramètres moléculaires de l'échantillon E, parmi lesquels se trouvent des concentrations moléculaires $C_{i,j}$ des protéines d'intérêt, où i désigne l'expérience et j désigne une protéine d'intérêt,
- des paramètres techniques précités $\beta_{i,j,k}$ et $\alpha_{i,j,k,l}$ de la chaîne de traitement biologique 12,
- d'un modèle $M_{i,j,k,l}$ de signal mesuré pour un fragment d'un peptide considéré, et
- d'autres paramètres techniques $\varepsilon_{i,j,k,l}$ de la chaîne de traitement biologique 12, représentatifs de bruits de mesure, ces bruits étant a priori différents d'un fragment à l'autre, d'un peptide à l'autre, d'une protéine d'intérêt à l'autre et d'une expérience à l'autre.

On notera que certains paramètres techniques de la chaîne de traitement ne sont pas connus de façon absolue et sans cette connaissance absolue, il n'est pas possible d'estimer de façon absolue la concentration $C_{i,j}$ des protéines d'intérêt. En pratique, ce problème est résolu par l'insertion de protéines de marquage équivalentes aux protéines d'intérêt (mais de masse différente) dans l'échantillon E avant le passage de ce dernier dans la chaîne de traitement 12. La concentration $C_{i,j}*$ de ces protéines de marquage est connue, de sorte que les paramètres techniques ainsi que la concentration $C_{i,j}$ peuvent alors être estimés à l'aide de $C_{i,j}*$ et d'une comparaison des pics correspondant aux protéines d'intérêt et aux protéines de marquage dans le signal observé $M_i$.

Selon une variante, on peut injecter d'autres molécules marquées telles que des peptides marqués conjointement ou à la place de protéines marquées.

Conformément à l'invention, des contraintes sont imposées au modèle direct du signal $M_i$. L'étape suivant la chromatographie comportant plusieurs mesures de signaux représentatifs de produits de cette chromatographie, le modèle impose au moins une caractéristique commune entre signaux obtenus de ces mesures multiples. En particulier, dans l'exemple de la figure 1, le passage de peptides ionisés dans le spectromètre de masse SRM 26 induit une pluralité de signaux mesurables représentatifs de plusieurs fragments de ces peptides qui sont produits par la cellule de collision 26B. Le modèle suppose alors que la forme temporelle des signaux représentatifs des L fragments d'un même peptide parent est issue de la forme temporelle chromatographique du signal représentatif du peptide parent pour une même expérience. Soit $Y_{i,j,k}(t)$ cette forme temporelle, on peut définir le signal $Y_{i,j,k,l}(n)$ à temps discret n du fragment l tel que :

$$Y_{i,j,k,l}(n) = g_l(Y_{i,j,k}(t)),$$

où $g_l$ est une fonction associée au fragment l liant le signal temporel à temps continu du signal de l'ion précurseur $Y_{i,j,k}(t)$. Plus précisément, la fonction g, réalise un échantillonnage temporel et une intégration du signal continu $Y_{i,j,k}(t)$. Ainsi, le signal $Y_{i,j,k,l}(n)$ correspond à un signal représentatif d'un élément l constituant le produit k. Dans cet exemple, l'élément l est issu de la fragmentation du produit k. Dans l'exemple de réalisation présenté, on considère que la fonction g, est indépendante du fragment l, et que la réponse du détecteur est linéaire, ce qui correspond à un cas particulier.

Cette contrainte se traduit par la relation suivante portant sur le modèle $Y_{i,j,k,l}$ : $\forall\, l,\ 1 \leq l \leq L,\ Y_{i,j,k,l} = Y_{i,j,k}$.

On suppose également que le modèle $Y_{i,j,k}$ est indépendant d'un marquage ou non des protéines d'intérêt, ce qui se traduit par la notation suivante :

$$Y_{i,j,k} = Y^*_{i,j,k}.$$

Dans l'exemple de la figure 1 également, on suppose que le rendement $\beta_{i,j,k}$ lié aux étapes que subit le peptide k est indépendant d'un marquage ou non des protéines d'intérêt, ce qui se traduit par la notation suivante :

$$\beta_{i,j,k} = \beta^*_{i,j,k}.$$

Ces deux dernières égalités sont justifiées par des propriétés chimiques communes des produits traversant les étapes de digestion, de chromatographie liquide, d'électronébulisateur et les premiers étages du spectromètre de masse..

En revanche, le rendement $\alpha_{i,j,k,l}$ des étapes de spectrométrie de masse SRM à partir de la fragmentation est a priori différent selon que les protéines sont marquées ou non. Ce choix dans le modèle n'est pas évident parce que l'usage est de considérer que les molécules marquées et non marquées ont rigoureusement le même comportement. Mais ce choix permet de s'ajuster plus fidèlement aux données même lorsqu'elles diffèrent du modèle direct. Ce cas se présente par exemple lors de l'ajout du signal d'un contaminant sur les signaux de molécules marquées et non sur ceux des molécules non marquées.

De même, les paramètres de bruit $\varepsilon_{i,j,k,l}$ dépendent du marquage ou non des protéines mais sont tous supposés suivre des lois normales de moyenne nulle. Si tel n'est pas le cas, les données peuvent être transformées pour obtenir une statistique de bruit proche de celle susnommée, telle que la transformation d'Anscombe.

Il en résulte que si l'on note $M_{i,j,k,l}(n)$ le modèle de signal représentatif du fragment l du peptide k de la protéine j de l'expérience i, et $M^*_{i,j,k,l}(n)$ le modèle du même fragment marqué, le modèle analytique direct choisi impose :

$$M_{i,j,k,l}(n) = \alpha_{i,j,k,l} \cdot \beta_{i,j,k} \cdot Y_{i,j,k}(n) \cdot C_{i,j} + \varepsilon_{i,j,k,l}(n)$$

et

$$M^{*}_{i,j,k,l}(n) = \alpha^{*}_{i,j,k,l} \cdot \beta_{i,j,k} \cdot Y_{i,j,k}(n) \cdot C^{*}_{i,j} + \varepsilon^{*}_{i,j,k,l}(n),$$

soit :

$$M_{i} := \left\{ M_{i,j,k,l}(n); M^{*}_{i,j,k,l}(n) \mid j=1..J, k=1..K, l=1..L \right\}.$$

Sur fourniture des signaux effectivement observés $M_{i,j,k,l}$ et $M^{*}_{i,j,k,l}$, la séquence programmée d'instructions 30 est conçue pour résoudre l'inversion de ce modèle analytique, par exemple par minimisation de l'erreur quadratique selon le critère des moindres carrés, ce qui peut s'écrire sous la forme suivante, pour les signaux acquis d'un fragment et de son homologue marqué :

$$\underset{\beta_{i,j,k}, \alpha_{i,j,k,l}, \alpha^{*}_{i,j,k,l}, C_{i,j}, \theta_{i,j,k}}{\arg\min} \left( \left\| M_{i,j,k,l}(n) - \alpha_{i,j,k,l} \cdot \beta_{i,j,k} \cdot C_{i,j} \cdot Y_{i,j,k}(n, \theta_{i,j,k}) \right\|^{2} + \left\| M^{*}_{i,j,k,l}(n) - \alpha^{*}_{i,j,k,l} \cdot \beta_{i,j,k} \cdot C^{*}_{i,j} \cdot Y_{i,j,k}(n, \theta_{i,j,k}) \right\|^{2} \right),$$

où $\theta_{i,j,k}$ est un ensemble de paramètres définissant la forme du signal mesurable représentatif du peptide k. Ces paramètres peuvent notamment inclure des paramètres descriptifs de la position et de la largeur du pic de ce signal.

Sous cette forme simplifiée, l'erreur quadratique présente cependant des performances limitées parce qu'elle est instable et présente des variations très rapides. Elle peut alors être optimisée en pondérant le critère des moindres carrés par l'inverse variance du bruit. Cette pondération permet de pénaliser les signaux ayant un faible rapport signal sur bruit et d'ajuster ainsi leur contribution à la détermination des paramètres. Chaque résidu composant la somme ci-dessus est donc avantageusement contrôlé par un terme de pénalisation. Cette écriture pondérée du critère des moindres carrés assure que les mesures les plus bruitées n'influent pas plus fortement que les autres mesures sur la solution obtenue. Cela permet une gestion automatique de signaux de qualités différentes, sans sélection des mesures à réaliser par un opérateur contrairement à ce que proposent généralement les techniques connues.

L'erreur quadratique peut ainsi être régularisée sous la forme suivante :

$$\underset{\beta_{i,j,k}, \alpha_{i,j,k,l}, \alpha^{*}_{i,j,k,l}, C_{i,j}, \theta_{i,j,k}}{\arg\min} \left( \frac{1}{R_{i,j,k,l}} \left\| M_{i,j,k,l}(n) - \alpha_{i,j,k,l} \cdot \beta_{i,j,k} \cdot C_{i,j} \cdot Y_{i,j,k}(n, \theta_{i,j,k}) \right\|^{2} + \frac{1}{R^{*}_{i,j,k,l}} \left\| M^{*}_{i,j,k,l}(n) - \alpha^{*}_{i,j,k,l} \cdot \beta_{i,j,k} \cdot C^{*}_{i,j} \cdot Y_{i,j,k}(n, \theta_{i,j,k}) \right\|^{2} \right)$$

Dans cette expression régularisée, $R_{i,j,k,l}$ est un paramètre de variance de bruit pour le fragment de peptide de la protéine d'intérêt considérée et $R^{*}_{i,j,k,l}$ est un paramètre de variance de bruit pour le même fragment marqué. $R_{i,j,k,l}$ et $R^{*}_{i,j,k,l}$ peuvent être estimés comme la variance :

- d'une portion de signal pour laquelle le signal du fragment est nul (on considère que la portion du signal d'intérêt ne contient que du bruit),
- d'un signal approximant le bruit en tant que différence entre la mesure et la mesure filtrée ; la mesure filtrée est alors une approximation du modèle de signal.

L'erreur quadratique peut également être régularisée sous la forme suivante :

$$\underset{\beta_{i,j,k},\alpha_{i,j,k,l},\alpha^*_{i,j,k,l},C_{i,j},\theta_{i,j,k}}{\mathrm{argmin}}\left(\begin{array}{l}\dfrac{1}{R_{i,j,k,l}}\left\|M_{i,j,k,l}(n)-\alpha_{i,j,k,l}\cdot\beta_{i,j,k}\cdot C_{i,j}\cdot Y_{i,j,k}(n,\theta_{i,j,k})\right\|^2\\[2mm]+\dfrac{1}{R^*_{i,j,k,l}}\left\|M^*_{i,j,k,l}(n)-\alpha^*_{i,j,k,l}\cdot\beta_{i,j,k}\cdot C^*_{i,j}\cdot Y_{i,j,k}(n,\theta_{i,j,k})\right\|^2\\[2mm]+\mu\left\|\alpha_{i,j,k,l}-\alpha_{i,j,k,l}^{\ *}\right\|^2\end{array}\right).$$

Dans cette expression régularisée également, le paramètre $\mu$ agit comme un paramètre de réglage ou de compromis. Pour une valeur forte de ce paramètre $\mu$, la différence des gains des transitions de l'étape de spectrométrie SRM est fortement pénalisée. Cela tend à prendre comme modèle des signaux une égalité des gains des transitions. Pour une valeur nulle du paramètre $\mu$, il n'y a pas de contrainte sur les estimations des gains des transitions. On peut estimer ce paramètre en le faisant varier sur des acquisitions de tests et vérifier la stabilité des solutions obtenues et/ou l'adéquation de ces estimations par rapport à la valeur attendue si celle-ci est connue.

En résumé, l'équation d'erreur quadratique à minimiser suppose l'utilisation de trois termes, $R_{i,j,k,l}$, $R^*_{i,j,k,l}$ et $\mu$, estimés préalablement.

On note que cette minimisation se fait à l'échelle des fragments de peptides. Ainsi, après la réalisation de cette minimisation de façon connue en soi, les paramètres estimés peuvent être réévalués en considérant tous les signaux à l'échelle des peptides.

Concrètement, par peptide, le critère de minimisation est la minimisation de la somme des critères de minimisation de tous les fragments issus du peptide considéré, soit :

$$\underset{\beta_{i,j,k},\alpha_{i,j,k,l},\alpha^*_{i,j,k,l},C_{i,j},\theta_{i,j,k}}{\mathrm{argmin}}\left(\sum_{l}\left[\begin{array}{l}\dfrac{1}{R_{i,j,k,l}}\left\|M_{i,j,k,l}(n)-\alpha_{i,j,k,l}\cdot\beta_{i,j,k}\cdot C_{i,j}\cdot Y_{i,j,k}(n,\theta_{i,j,k})\right\|^2\\[2mm]+\dfrac{1}{R^*_{i,j,k,l}}\left\|M^*_{i,j,k,l}(n)-\alpha^*_{i,j,k,l}\cdot\beta_{i,j,k}\cdot C^*_{i,j}\cdot Y_{i,j,k}(n,\theta_{i,j,k})\right\|^2\\[2mm]+\mu\left\|\alpha_{i,j,k,l}-\alpha_{i,j,k,l}^{\ *}\right\|^2\end{array}\right]\right).$$

Cette minimisation engendre autant d'estimations des concentrations $C_{i,j}$ que de peptides.

Après la réalisation de cette minimisation de façon connue en soi à l'échelle des peptides, les paramètres estimés peuvent être réévalués en considérant tous les signaux à l'échelle des protéines.

Concrètement, par protéine, le critère de minimisation est la minimisation de la somme des critères de minimisation de tous les peptides issus de la protéine considérée, soit :

$$\underset{\beta,C}{\mathrm{argmin}}\left(\sum_{k}\sum_{l}\left[\begin{array}{l}\dfrac{1}{R_{i,j,k,l}}\left\|M_{i,j,k,l}(n)-\alpha_{i,j,k,l}\cdot\beta_{i,j,k}\cdot C_{i,j}\cdot Y_{i,j,k}(n,\theta_{i,j,k})\right\|^2\\[2mm]+\dfrac{1}{R^*_{i,j,k,l}}\left\|M^*_{i,j,k,l}(n)-\alpha^*_{i,j,k,l}\cdot\beta_{i,j,k}\cdot C^*_{i,j}\cdot Y_{i,j,k}(n,\theta_{i,j,k})\right\|^2\\[2mm]+\mu\left\|\alpha_{i,j,k,l}-\alpha_{i,j,k,l}^{\ *}\right\|^2\end{array}\right]\right).$$

Cependant, comme cela est visible dans la formule ci-dessus, il peut être choisi de ne réévaluer qu'une partie des paramètres, en l'occurrence les paramètres $\beta$ et C.

En variante, l'inversion telle que détaillée ci-dessus pourrait être résolue dans un cadre bayésien par une estimation a posteriori basée sur des modèles de probabilité, par exemple des modèles a priori, d'au moins une partie des paramètres précités. On pourra alors se reporter au document EP 2 028 486.

La séquence d'instructions 30 et la base de données 32 sont fonctionnellement présentées comme distinctes sur la figure 1, mais en pratique elles peuvent êtres réparties différemment en fichiers de données, codes sources ou librairies informatiques sans que cela ne change quoi que ce soit aux fonctions remplies.

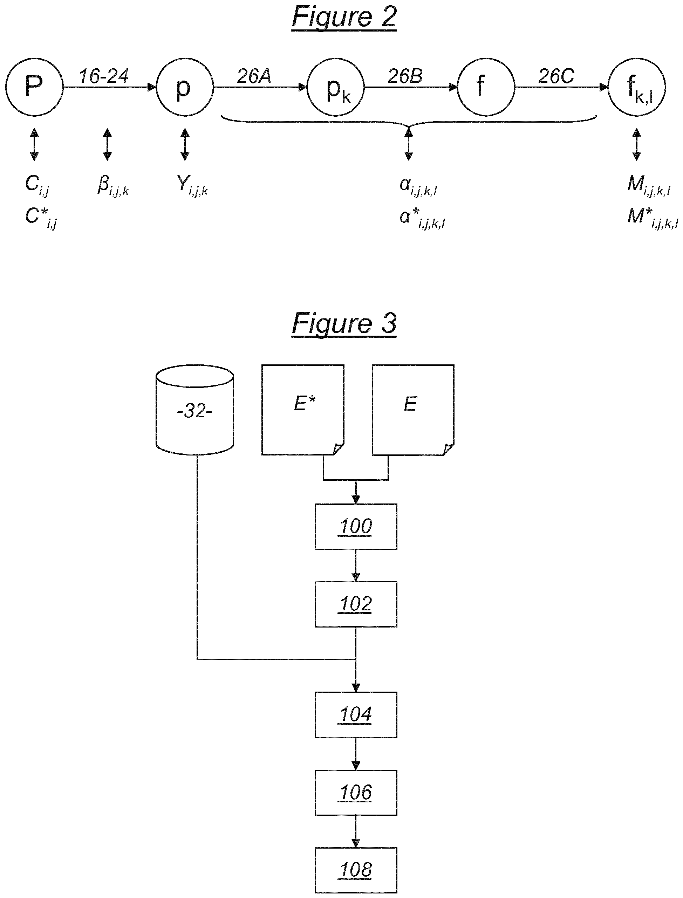

Comme illustré sur la figure 2, les paramètres de la chaîne de traitement 12 sont liés entre eux de manière à former un modèle global présentant une hiérarchie par la similarité des modèles des signaux représentatifs des ions fils ($f_{k,l}$) d'un même ion parent ($p_k$) traité par spectrométrie SRM. Les protéines P sont associées aux concentrations $C_{i,j}$ et $C^*_{i,j}$ à déterminer par inversion. Suite à l'étape de chromatographie et de nébulisation, ainsi qu'aux étapes relatives aux étages du spectromètre de masse en amont de la fragmentation, dont le rendement est modélisé par les paramètres $\beta_{i,j,k}$, des peptides p sont identifiables par les signaux $Y_{i,j,k}$ modélisés. Enfin, dans le spectromètre de masse SRM 26 dont le rendement à partir de la fragmentation est modélisé par les paramètres $\alpha_{i,j,k,l}$ et $\alpha^*_{i,j,k,l}$, les ions parents $p_k$ peuvent être identifiés avant d'être fragmentés en ions fils f qui peuvent à leur tour être identifiés individuellement ($f_{k,l}$) à l'aide des mesures $M_{i,j,k,l}$ et $M^*_{i,j,k,l}$. Les rendements $\alpha_{i,j,k,l}$ et $\alpha^*_{i,j,k,l}$ correspondent aux rendements de l'étage de fragmentation et des étages suivants.

Le procédé d'estimation de paramètres moléculaires illustré sur la figure 3 comporte une première étape de mesure 100 lors de laquelle, conformément au montage de la figure 1, l'échantillon E auquel on a ajouté les protéines de marquage E* traverse toute la chaîne de traitement 12 du dispositif 10. Cette étape est identifiée en tant qu'expérience d'indice i.

L'ensemble des signaux mesurés $M_i$ est ainsi fourni en sortie du spectromètre SRM 26 lors d'une étape 102.

Au cours d'une étape 104 mise en oeuvre par le processeur 28 sur exécution de la séquence programmée d'instructions 30, les concentrations $C_{i,j}$ de protéines d'intérêt sont estimées, parmi les autres paramètres techniques de la chaîne de traitement 12, par inversion du modèle analytique direct détaillé précédemment, à l'échelle des fragments de peptides ionisés fournis en sortie du deuxième analyseur 26C.

Au cours d'une étape 106 mise en oeuvre par le processeur 28 sur exécution de la séquence programmée d'instructions 30, les concentrations $C_{i,j}$ de protéines d'intérêt sont réévaluées, parmi les autres paramètres techniques de la chaîne de traitement 12, par inversion du modèle analytique direct détaillé précédemment, à l'échelle des peptides ionisés fournis en entrée du premier analyseur 26A.

Enfin, au cours d'une étape 108 mise en oeuvre par le processeur 28 sur exécution de la séquence programmée d'instructions 30, les concentrations $C_{i,j}$ de protéines d'intérêt sont réévaluées, parmi une partie des autres paramètres techniques de la chaîne de traitement 12, par inversion du modèle direct détaillé précédemment, à l'échelle des protéines fournis en entrée de la colonne de digestion 20.

Il apparaît clairement qu'un procédé tel que celui décrit précédemment, mis en oeuvre par le dispositif d'estimation 10, permet, grâce à une modélisation directe astucieuse du signal observé en sortie de la chaîne de traitement 12, de fournir une estimation fiable de paramètres moléculaires (par exemple les concentrations) de composants d'intérêts prédéterminés tels que des protéines. En particulier, ce procédé excelle à évaluer correctement des pics de mesure en présence de bruit important ou superposés à d'autres pics d'un chromatogramme, ce que les méthodes classiques d'analyse de pics ou d'analyses spectrales réalisent moins bien.

Des applications concrètes de ce procédé comportent notamment la détection de marqueurs cancéreux (dans ce cas les composants d'intérêt sont des protéines) dans un échantillon biologique de sang ou d'urine.

Plus généralement, les domaines d'applications sont nombreux, allant de l'amélioration de la spécificité des spectromètres de masse SRM à la quantification automatisée de molécules.

L'amélioration de la spécificité des spectromètres de masse SRM est rendue possible par exploitation de la forme temporelle commune des différentes transitions d'un même ion parent dans le modèle analytique direct employé.

De même, la quantification automatisée de molécules est rendue possible par utilisation d'un modèle de signal intégrant une redondance d'informations dans les signaux mesurables. Dans une approche bayésienne, cette redondance, qui est un héritage des caractéristiques d'un ion parent aux fragments enfants, peut être formulée comme un modèle hiérarchique.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

Notamment, les composants d'intérêt ne sont pas nécessairement des protéines, mais peuvent être plus généralement des molécules ou des assemblages moléculaires pour une analyse biologique ou chimique.

Notamment également, l'étape de mesures multiples de produits issus de l'étape de chromatographie n'est pas nécessairement une spectrométrie en tandem de type SRM.

**Revendications**

**1.** Procédé d'estimation de concentrations moléculaires ou de dosages de composants dans un échantillon, comportant les étapes suivantes :

- faire passer l'échantillon par une chaîne de traitement (12) incluant une étape de chromatographie,
- obtenir ainsi un signal représentatif des concentrations moléculaires ou des dosages de composants et dépendant de paramètres techniques de la chaîne de traitement,
- définir un modèle analytique direct dudit signal à l'aide d'une fonction de modélisation comprenant des paramètres relatifs aux concentrations moléculaires ou dosages de composants et auxdits paramètres techniques de la chaîne de traitement, et
- estimer les concentrations moléculaires ou les dosages de composants à l'aide d'un dispositif de traitement de signal (14) par inversion du modèle analytique direct,

**caractérisé en ce que** :

- la chaîne de traitement inclut une étape de mesures multiples comportant les détections et mesures d'au moins deux éléments différents d'un même produit issu de l'étape de chromatographie, ces éléments n'ayant pas été distingués par l'étape de chromatographie, pour l'obtention d'au moins deux signaux mesurés,
- le modèle analytique direct dudit signal représentatif des concentrations moléculaires ou des dosages de composants comporte la modélisation de cette étape de mesures multiples et inclut une modélisation distincte pour chacun desdits au moins deux signaux mesurés, et
- cette modélisation impose une forme temporelle chromatographique commune entre lesdits au moins deux signaux mesurés.

2. Procédé d'estimation de concentrations moléculaires ou de dosages de composants selon la revendication 1, dans lequel :

- la chaîne de traitement inclut une étape de fragmentation de produits issus de l'étape de chromatographie, chaque fragmentation générant une pluralité de fragments, et
- la chaîne de traitement inclut une étape de mesures d'une sélection de fragments correspondant à un même produit, ces mesures constituant lesdites mesures multiples relatives audit produit.

3. Procédé d'estimation de concentrations moléculaires ou de dosages de composants selon la revendication 1 ou 2, dans lequel l'étape de mesures multiples comporte une spectrométrie de masse en tandem de produits issus de l'étape de chromatographie, par exemple une spectrométrie SRM.

4. Procédé d'estimation de concentrations moléculaires ou de dosages de composants selon l'une quelconque des revendication 1 à 3, dans lequel les concentrations moléculaires ou dosages de composants sont relatifs à des protéines et l'échantillon comporte l'un des éléments de l'ensemble constitué de sang, plasma et urine ou autre fluide biologique.

5. Procédé d'estimation de concentrations moléculaires ou de dosages de composants selon les revendications 3 et 4, dans lequel le modèle analytique direct prend la forme suivante :

$$M_{i,j,k,l}(n) = \alpha_{i,j,k,l} \cdot \beta_{i,j,k} \cdot g_l\left(Y_{i,j,k}(t)\right) \cdot C_{i,j} + \varepsilon_{i,j,k,l}(n),$$

et

$$M^*_{i,j,k,l}(n) = \alpha^*_{i,j,k,l} \cdot \beta_{i,j,k} \cdot g_l\left(Y_{i,j,k}(t)\right) \cdot C^*_{i,j} + \varepsilon^*_{i,j,k,l}(n),$$

soit :

$$M_i := \left\{ M_{i,j,k,l}(n) ; M^*_{i,j,k,l}(n) \mid j = 1..J, k = 1..K, l = 1..L \right\},$$

où :

- n est un indice de temps discret,

- i est un indice d'expérience identifiant un passage d'échantillon par la chaîne de traitement,
- j est un indice identifiant une protéine d'intérêt dans l'échantillon,
- k est un indice identifiant un peptide issu d'une digestion de protéine d'intérêt,
- I est un indice identifiant un fragment de peptide ionisé issu de la spectrométrie de masse en tandem,
- $M_i$ est ledit signal représentatif des concentrations moléculaires ou des dosages de composants,
- $\beta_{i,j,k}$ est un paramètre de rendement,
- $\alpha_{i,j,k,l}$ et $\alpha^*_{i,j,k,l}$ sont des paramètres de rendement de la spectrométrie de masse en tandem à partir de l'étape de fragmentation respectivement pour des protéines non marquées et marquées,
- $\varepsilon_{i,j,k,l}$ et $\varepsilon^*_{i,j,k,l}$ sont des paramètres de bruit de la chaîne de traitement respectivement pour des protéines non marquées et marquées,
- $C_{i,j}$ et $C^*_{i,j}$ sont des concentrations de protéines d'intérêt à estimer par inversion du modèle analytique direct,
- $Y_{i,j,k}(t)$ est le signal du peptide ionisé, et
- $g_l$ est une fonction associée au fragment I liant le signal du fragment au signal de son ion parent $Y_{i,j,k}(t)$.

6. Procédé d'estimation de concentrations moléculaires ou de dosages de composants selon l'une quelconque des revendications 1 à 5, dans lequel l'inversion du modèle analytique direct est réalisée par minimisation d'une erreur quadratique selon le critère des moindres carrés ou par une méthode d'inversion bayésienne.

7. Procédé d'estimation de concentrations moléculaires ou de dosages de composants selon la revendication 6, dans lequel l'erreur quadratique à minimiser est une erreur quadratique régularisée prenant la forme suivante à l'échelle des fragments des peptides ionisés :

$$\underset{\beta_{i,j,k},\alpha_{i,j,k,l},\alpha^*_{i,j,k,l},C_{i,j},\theta_{i,j,k}}{\operatorname{argmin}} \left( \begin{array}{l} \dfrac{1}{R_{ijkl}}\left\| M_{i,j,k,l}(n)-\alpha_{i,j,k,l}\cdot\beta_{i,j,k}\cdot C_{i,j}\cdot g_l\left(Y_{i,j,k}\left(t,\theta_{i,j,k}\right)\right)\right\|^2 \\[2ex] +\dfrac{1}{R^*_{ijkl}}\left\| M^*_{i,j,k,l}(n)-\alpha^*_{i,j,k,l}\cdot\beta_{i,j,k}\cdot C^*_{i,j}\cdot g_l\left(Y_{i,j,k}\left(t,\theta_{i,j,k}\right)\right)\right\|^2 \\[2ex] +\mu\left\|\alpha_{i,j,k,l}-\alpha_{i,j,k,l}{}^*\right\|^2 \end{array} \right),$$

où :

- $\theta_{i,j,k}$ est un ensemble de paramètres définissant la forme du signal mesurable représentatif du peptide k,
- $R_{i,j,k,l}$ est un paramètre de variance de bruit pour le fragment de peptide de la protéine d'intérêt considérée,
- $R^*_{i,j,k,l}$ est un paramètre de variance de bruit pour le même fragment marqué, et
- $\mu$ est un paramètre de réglage ou de compromis.

8. Dispositif (10) d'estimation de concentrations moléculaires ou de dosages de composants dans un échantillon, comportant :

- une chaîne de traitement (12) de l'échantillon incluant une colonne de chromatographie (22) et des moyens de mesures multiples de produits issus de la colonne de chromatographie (22), la chaîne de traitement étant conçue pour la fourniture d'un signal représentatif des concentrations moléculaires ou des dosages de composants et dépendant de paramètres techniques de la chaîne de traitement (12), et
- un dispositif de traitement de signal (14) comprenant :

• une base de données de modélisation (32) comportant des paramètres d'un modèle analytique direct du signal fourni par la chaîne de traitement (12), ce modèle analytique direct étant défini à l'aide d'une fonction de modélisation comprenant des paramètres relatifs aux concentrations moléculaires ou dosages de composants et auxdits paramètres techniques de la chaîne de traitement (12),
• une séquence programmée d'instructions stockée en mémoire pour estimer les concentrations moléculaires ou dosages de composants par inversion du modèle analytique direct,
• un processeur d'exécution de cette séquence programmée d'instructions,

**caractérisé en ce que** :

- les moyens de mesures multiples sont conçus pour détecter et mesurer au moins deux éléments différents d'un même produit issu de la colonne de chromatographie (22), ces éléments n'ayant pas été distingués par l'étape de chromatographie, pour l'obtention d'au moins deux signaux mesurés,
- le modèle analytique dont les paramètres sont stockés dans la base de données comporte une modélisation de ces moyens de mesures multiples et inclut une modélisation distincte pour chacun desdits au moins deux signaux mesurés, cette modélisation imposant une forme temporelle chromatographique commune entre lesdits au moins deux signaux mesurés.

**9.** Dispositif d'estimation de concentrations moléculaires ou de dosages de composants selon la revendication 8, dans lequel la chaîne de traitement comporte une colonne de chromatographie et un spectromètre de masse en tandem et est conçue pour la fourniture d'un signal représentatif des concentrations de composants de l'échantillon en fonction d'un temps de rétention dans la colonne de chromatographie et de plusieurs rapports masse/charge dans le spectromètre de masse en tandem.

**Patentansprüche**

**1.** Verfahren zum Abschätzen von Molekülkonzentrationen oder von Komponentendosierungen in einer Probe, die folgenden Schritte beinhaltend:

- Durchlaufen lassen der Probe durch eine Behandlungskette (12), die einen Chromatographie-Schritt beinhaltet,
- somit Erhalten eines Signals, das repräsentativ für die Molekülkonzentrationen oder der Komponentendosierungen, und abhängig von technischen Parametern der Behandlungskette ist,
- Definieren eines direkten analytischen Modells aus dem Signal mithilfe einer Modellierungsfunktion, welche Parameter in Bezug auf die Molekülkonzentrationen oder die Komponentendosierungen und die technischen Parameter der Behandlungskette umfasst, und
- Abschätzen der Molekülkonzentrationen oder der Komponentendosierungen mithilfe einer Signalbehandlungsvorrichtung (14) durch Umkehren des direkten analytischen Modells,

**dadurch gekennzeichnet, dass**

- die Behandlungskette einen Schritt mehrerer Messungen beinhaltet, die die Detektionen und Messungen mindestens zweier unterschiedlicher Elemente eines selben aus dem Chromatographie-Schritt stammenden Produkts beinhalten, wobei diese Elemente durch den Chromatographie-Schritt nicht unterschieden worden sind, für den Erhalt mindestens zweier gemessener Signale,
- das direkte analytische Modell des Signals, das repräsentativ für die Molekülkonzentrationen oder der Komponentendosierungen ist, die Modellierung dieses Schrittes mehrerer Messungen beinhaltet, und eine getrennte Modellierung für jedes der mindestens zwei gemessenen Signale beinhaltet, und
- diese Modellierung eine gemeinsame zeitbasierte chromatographische Form zwischen den mindestens zwei gemessenen Signalen vorschreibt.

**2.** Verfahren zum Abschätzen von Molekülkonzentrationen oder von Komponentendosierungen nach Anspruch 1, wobei:

- die Behandlungskette einen Fragmentierungsschritt von aus dem Chromatographie-Schritt stammenden Produkten beinhaltet, wobei jede Fragmentierung eine Vielzahl von Fragmenten erzeugt, und
- die Behandlungskette einen Schritt von Messungen einer Auswahl von Fragmenten beinhaltet, die einem gleichen Produkt entsprechen, wobei diese Messungen die mehreren Messungen in Bezug auf das Produkt darstellen.

**3.** Verfahren zum Abschätzen von Molekülkonzentrationen oder von Komponentendosierungen nach Anspruch 1 oder 2, wobei der Schritt von mehreren Messungen eine Tandem-Massenspektrometrie von aus dem Chromatographie-Schritt stammenden Produkten, beispielsweise eine SRM-Spektrometrie, beinhaltet.

**4.** Verfahren zum Abschätzen von Molekülkonzentrationen oder von Komponentendosierungen nach einem der Ansprüche 1 bis 3, wobei sich die Molekülkonzentrationen oder Komponentendosierungen auf Proteine beziehen, und die Probe eines der Elemente der Einheit bestehend aus Blut, Plasma und Urin oder einer anderen biologischen Flüssigkeit beinhaltet.

5. Verfahren zum Abschätzen von Molekülkonzentrationen oder von Komponentendosierungen nach den Ansprüchen 3 und 4, wobei das direkte analytische Modell die folgende Form annimmt:

$$M_{i,j,k,l}(n) = \alpha_{i,j,k,l} \cdot \beta_{i,j,k} \cdot g_l(Y_{i,j,k}(t)) \cdot C_{i,j} + \varepsilon_{i,j,k,l}(n),$$

und

$$M^*_{i,j,k,l}(n) = \alpha^*_{i,j,k,l} \cdot \beta_{i,j,k} \cdot g_l(Y_{i,j,k}(t)) \cdot C^*_{i,j} + \varepsilon^*_{i,j,k,l}(n),$$

somit:

$$M_i := \left\{ M_{i,j,k,l}(n); M^*_{i,j,k,l}(n) \mid j = 1..J, k = 1..K, l = 1..L \right\},$$

worin:

- n ein diskreter Zeitindex ist,
- i ein Erfahrungsindex ist, der einen Durchlauf der Probe durch die Behandlungskette identifiziert,
- j ein Index ist, der ein Protein von Interesse in der Probe identifiziert,
- k ein Index ist, der ein aus der Verdauung des Proteins von Interesse stammendes Peptid identifiziert,
- 1 ein Index ist, der ein aus der Tandem-Massenspektrometrie stammendes ionisiertes Peptidfragment identifiziert,
- $M_i$ das Signal ist, das repräsentativ für die Molekülkonzentrationen oder Komponentendosierungen ist,
- $\beta_{i,j,k}$ ein Leistungsparameter ist,
- $\alpha_{i,j,k,l}$ und $\alpha^*_{i,j,k,l}$ Leistungsparameter der Tandem-Massenspektrometrie ausgehend von dem Fragmentierungsschritt jeweils für nicht markierte und markierte Proteine sind,
- $\varepsilon_{i,j,k,l}$ und $\varepsilon^*_{i,j,k,l}$ Geräuschparameter der Behandlungskette jeweils für nicht markierte und markierte Proteine sind,
- $C_{i,j}$ und $C^*_{i,j}$ Konzentrationen von Proteinen von Interesse sind, die von der Umkehr des direkten analytischen Modells zu abzuschätzen sind,
- $Y_{i,j,k}(t)$ das Signal des ionisierten Peptids ist, und
- $g_l$ eine Funktion ist, die dem Fragment 1 zugewiesen ist, welches das Signal des Fragments mit dem Signal seines verwandten Ions $Y_{i,j,k}(t)$ verbindet.

6. Verfahren zum Abschätzen von Molekülkonzentrationen oder von Komponentendosierungen nach einem der Ansprüche 1 bis 5, wobei die Umkehr des direkten analytischen Modells durch Minimieren eines quadratischen Fehlers entsprechend dem Kriterium der kleinsten Quadrate oder durch eine Umkehrmethode nach Bayes ausgeführt wird.

7. Verfahren zum Abschätzen von Molekülkonzentrationen oder von Komponentendosierungen nach Anspruch 6, wobei der zu minimierende quadratische Fehler ein regulierter quadratischer Fehler ist, der die folgende Form im Maßstab der Fragmente der ionisierten Peptide einnimmt:

$$\underset{\beta_{i,j,k},\alpha_{i,j,k,l},\alpha^*_{i,j,k,l},C_{i,j},\theta_{i,j,k}}{\mathrm{argmin}} \left( \begin{array}{l} \dfrac{1}{R_{ijkl}} \left\| M_{i,j,k,l}(n) - \alpha_{i,j,k,l} \cdot \beta_{i,j,k} \cdot C_{i,j} \cdot g_l(Y_{i,j,k}(t,\theta_{i,j,k})) \right\|^2 \\[2ex] + \dfrac{1}{R^*_{ijkl}} \left\| M^*_{i,j,k,l}(n) - \alpha^*_{i,j,k,l} \cdot \beta_{i,j,k} \cdot C^*_{i,j} \cdot g_l(Y_{i,j,k}(t,\theta_{i,j,k})) \right\|^2 \\[2ex] + \mu \left\| \alpha_{i,j,k,l} - \alpha^*_{i,j,k,l} \right\|^2 \end{array} \right),$$

worin:

- $\theta_{i,j,k}$ eine Einheit von Parametern ist, die die Form des messbaren Signals definieren, das repräsentativ für das Peptid k ist,
- $R_{i,j,k,l}$ ein Parameter einer Geräuschvarianz für das Peptidfragment des betrachteten Proteins von Interesse ist,
- $R^*_{i,j,k,l}$ ein Parameter einer Geräuschvarianz für dasselbe markierte Fragment ist, und
- $\mu$ ein Einstellungs- oder Kompromissparameter ist.

8. Vorrichtung (10) zum Abschätzen von Molekülkonzentrationen oder von Komponentendosierungen in einer Probe, Folgendes beinhaltend:

   - eine Behandlungskette (12) der Probe, die eine Chromatographie-Säule (22) und Mittel für mehrere Messungen von aus der Chromatographie-Säule (22) stammenden Produkten beinhaltet, wobei die Behandlungskette zum Bereitstellen eines Signals gestaltet ist, das repräsentativ für die Molekülkonzentrationen oder Komponentendosierungen ist, und von technischen Parametern der Behandlungskette (12) abhängig ist, und
   - eine Signalbehandlungsvorrichtung (14), Folgendes beinhaltend:

     • eine Modellierungsdatenbank (32), die Parameter eines direkten analytischen Modells des Signals beinhaltet, das von der Behandlungskette (12) bereitgestellt wird, wobei dieses direkte analytische Modell mithilfe einer Modellierungsfunktion, welche Parameter in Bezug auf die Molekülkonzentrationen oder die Komponentendosierungen und die technischen Parameter der Behandlungskette (12) umfasst, definiert wird,
     • eine programmierte Anweisungssequenz, die in einem Speicher abgelegt ist, um die Molekülkonzentrationen oder Komponentendosierungen durch Umkehr des direkten analytischen Modells abzuschätzen,
     • einen Prozessor zum Ausführen dieser programmierten Anweisungssequenz,

   **dadurch gekennzeichnet, dass**:

   - die Mittel für mehrere Messungen gestaltet sind, um mindestens zwei unterschiedliche eines gleichen, aus der Chromatographie-Säule (22) stammenden Produkts zu detektieren und zu messen, wobei diese Elemente durch den Chromatographie-Schritt nicht unterschieden worden sind, für den Erhalt mindestens zweier gemessener Signale,
   - das analytische Modell, dessen Parameter in der Datenbank abgelegt sind, eine Modellierung dieser Mittel für mehrere Messungen beinhaltet und eine getrennte Modellierung für jedes der mindestens zwei gemessenen Signale, wobei diese Modellierung eine gemeinsame zeitbasierte chromatographische Form zwischen den mindestens zwei gemessenen Signalen vorschreibt.

9. Vorrichtung zum Abschätzen von Molekülkonzentrationen oder von Komponentendosierungen nach Anspruch 8, wobei die Behandlungskette eine Chromatographie-Säule und ein Tandem-Massenspektrometer beinhaltet, und für die Bereitstellung eines Signals gestaltet ist, das repräsentativ für die Komponentenkonzentrationen der Probe in Abhängigkeit von einer Rückhaltezeit in der Chromatographie-Säule, und mehrerer Masse-/Ladungsverhältnisse in dem Tandem-Massenspektrometer ist.

**Claims**

1. A method for estimating molecular concentrations or component assays in a sample, comprising the following steps:

   - passing the sample through a processing chain (12) including a chromatography step,
   - thereby obtaining a representative signal of molecular concentrations or component assays and depending on technical parameters of the processing chain,
   - defining a direct analytical model of said signal using a modelling function comprising parameters related to the molecular concentrations or component assays and to said technical parameters of the processing chain, and
   - estimating the molecular concentrations or component assays using a

   signal processing device (14) by inverting the direct analytical model, **characterised in that**:

   - the processing chain includes a step for multiple measurements comprising the detections and measurements of at least two different elements of one and the same product from the chromatography step, wherein these elements have not been distinguished by the chromatography step, to obtain at least two measured signals,

- the direct analytical model of said signal representative of the molecular concentrations or component assays comprises modelling of this multiple measurement step, and includes separate modelling for each of said at least two measured signals, and
- this modelling requires one common chromatographic time shape between said at least two measured signals.

2. The method for estimating molecular concentrations or component assays according to claim 1, wherein:

- the processing chain includes a step for fragmentation of products resulting from the chromatography step, each fragmentation generating a plurality of fragments, and
- the processing chain includes a step of measuring a selection of fragments corresponding to one and the same product, wherein these measurements constitute said multiple measurements relating to said product.

3. The method for estimating molecular concentrations or component assays according to claim 1 or 2, wherein the multiple measurement step comprises tandem mass spectrometry of products from the chromatography step, for example SRM spectrometry.

4. The method for estimating molecular concentrations or component assays according to any of claims 1 to 3, wherein the molecular concentrations or component assays relate to proteins and the sample comprises one of the elements of the set consisting of blood, plasma and urine or any other biological fluid.

5. The method for estimating molecular concentrations or component assays according to claims 3 and 4, wherein the direct analytical model takes the following format:

$$M_{i,j,k,l}\left(n\right) = \alpha_{i,j,k,l} \cdot \beta_{i,j,k} \cdot g_l\left(Y_{i,j,k}\left(t\right)\right) \cdot C_{i,j} + \varepsilon_{i,j,k,l}\left(n\right),$$

and

$$M^{*}_{i,j,k,l}\left(n\right) = \alpha^{*}_{i,j,k,l} \cdot \beta_{i,j,k} \cdot g_l\left(Y_{i,j,k}\left(t\right)\right) \cdot C^{*}_{i,j} + \varepsilon^{*}_{i,j,k,l}\left(n\right),$$

i.e.:

$$M_i := \left\{ M_{i,j,k,l}\left(n\right); M^{*}_{i,j,k,l}\left(n\right) \mid j = 1..J, k = 1..K, l = 1..L \right\},$$

where:

- n is a discrete time index,
- i is an experiment index identifying a sample passage via the processing chain,
- j is an index identifying a protein of interest in the sample,
- k is an index identifying a peptide from digestion of protein of interest,
- l is an index identifying an ionised peptide fragment from tandem mass spectrometry,
- $M_i$ is said representative signal of the molecular concentrations or component assays,
- $\beta_{i,j,k}$ is a yield parameter,
- $\alpha_{i,j,k,l}$ and $\alpha^{*}_{i,j,k,l}$ are tandem mass spectrometry yield parameters from the fragmentation steps for non-labelled and labelled proteins, respectively,
- $\varepsilon_{i,j,k,l}$ and $\varepsilon^{*}_{i,j,k,l}$ are processing chain noise parameters for non-labelled and labelled proteins, respectively,
- $C_{i,j}$ and $C^{*}_{i,j}$ are concentrations of proteins of interest to be estimated by inverting the direct analytical model,
- $Y_{i,j,k}(t)$ is the signal of the ionised peptide, and
- $g_l$ is a function associated with the fragment l binding the fragment signal with the signal of the parent ion thereof $Y_{i,j,k}(t)$.

6. The method for estimating molecular concentrations or component assays according to any of claims 1 to 5, wherein the direct analytical model is inverted by minimising a squared error according to the least squares criterion or by means of a Bayesian inversion method.

7. The method for estimating molecular concentrations or component assays according to claim 6, wherein the squared error to be minimised is a regularised squared error in the following format in terms of the ionised peptide fragments:

$$\underset{\beta_{i,j,k},\alpha_{i,j,k,l},\alpha^{*}_{i,j,k,l},C_{i,j},\theta_{i,j,k}}{\arg\min}\left(\begin{array}{c}\dfrac{1}{R_{ijkl}}\left\|M_{i,j,k,l}\left(n\right)-\alpha_{i,j,k,l}\cdot\beta_{i,j,k}\cdot C_{i,j}\cdot g_{l}\left(Y_{i,j,k}\left(t,\theta_{i,j,k}\right)\right)\right\|^{2}\\[3mm]+\dfrac{1}{R^{*}_{ijkl}}\left\|M^{*}_{i,j,k,l}\left(n\right)-\alpha^{*}_{i,j,k,l}\cdot\beta_{i,j,k}\cdot C^{*}_{i,j}\cdot g_{l}\left(Y_{i,j,k}\left(t,\theta_{i,j,k}\right)\right)\right\|^{2}\\[3mm]+\mu\left\|\alpha_{i,j,k,l}-\alpha_{i,j,k,l}^{\;*}\right\|^{2}\end{array}\right),$$

where:

- $\theta_{i,j,k}$ is a set of parameters defining the format of representative measurable signal of the peptide k,
- $R_{i,j,k,l}$ is a noise variance parameter for the peptide fragment of the protein of interest in question, and
- $R^{*}_{i,j,k,l}$ is a noise variance parameter for the same labelled fragment, and
- $\mu$ is an adjustment or compromise parameter.

8. A device (10) for estimating molecular concentrations or component assays in a sample, comprising:

- a sample processing chain (12) including a chromatography column (22) and means for multiple measurements of products from the chromatography column (22), the processing chain being designed to provide a representative signal of the molecular concentrations or component assays and depending on technical parameters of the processing chain (12), and
- a signal processing device (14) comprising:

• a modelling database (32) comprising parameters of a direct analytical model of the signal provided by the processing chain (12), said direct analytical model being defined by means of a modelling function comprising parameters relating to the molecular concentrations or component assays and to said technical parameters of the processing chain (12),
• a programmed sequence of instructions stored in memory to estimate the molecular concentrations or component assays by inverting the direct analytical model,
• a processor for executing said programmed sequence of instructions,

**characterized in that**:

- the multiple measurement means are designed to detect and measure at least two different elements of one and the same product from the chromatography column (22), wherein these elements have not been distinguished by the chromatography step, to obtain at least two measured signals,
- the analytical model, the parameters of which are stored in the database, comprises a modelling of these multiple measurement means and includes separate modelling for each of said at least two measured signals, wherein this modelling requires one common chromatographic time shape between said at least two measured signals.

9. The device for estimating molecular concentrations or component assays according to claim 8, wherein the processing chain comprises a chromatography column and a tandem mass spectrometer and is designed to provide a representative signal of the constituent concentrations of the sample as a function of a retention time in the chromatography column and a plurality of mass/load ratios in the tandem mass spectrometer.

## Figure 1

## Figure 2

$$P \xrightarrow{16\text{-}24} p \xrightarrow{26A} p_k \xrightarrow{26B} f \xrightarrow{26C} f_{k,l}$$

$$C_{i,j} \qquad \beta_{i,j,k} \qquad Y_{i,j,k} \qquad\qquad\qquad \alpha_{i,j,k,l} \qquad\qquad M_{i,j,k,l}$$
$$C^*_{i,j} \qquad\qquad\qquad\qquad\qquad\qquad\qquad \alpha^*_{i,j,k,l} \qquad\qquad M^*_{i,j,k,l}$$

## Figure 3

**EP 2 647 990 B1**

**Documents brevets cités dans la description**

- EP 2028486 A

**Littérature non-brevet citée dans la description**

- **STRUBEL G et al.** Bayesian estimation for molecular profile reconstruction in proteomics based on liquid chromatography and mass spectrometry. *ANNUAL INTERNATIONAL CONFERENCE OF THE IEEE ENGINEERING IN MEDICINE AND BIOLOGY SO-CIETY, FRANCE,* 2007, ISBN 978-1-4244-0787-3